## Europäisches Patentamt

## European Patent Office

## Office européen des brevets

(11) Veröffentlichungsnummer: **0 106 914**
**B1**

(12) # EUROPÄISCHE PATENTSCHRIFT

(45) Veröffentlichungstag der Patentschrift:
**04.06.86**

(51) Int. Cl.⁴: **A 47 J 31/54**

(21) Anmeldenummer: **82109899.3**

(22) Anmeldetag: **26.10.82**

(54) **Elektrischer Durchlauferhitzer für Kaffeemaschinen.**

(43) Veröffentlichungstag der Anmeldung:
**02.05.84 Patentblatt 84/18**

(45) Bekanntmachung des Hinweises auf die Patenterteilung:
**04.06.86 Patentblatt 86/23**

(84) Benannte Vertragsstaaten:
**AT CH DE FR GB IT LI**

(56) Entgegenhaltungen:
**CA - A - 1 092 634**
**DE - A - 2 023 598**
**DE - A - 2 551 779**
**DE - A - 2 642 571**
**DE - A - 2 652 656**
**DE - A - 2 808 182**
**US - A - 1 743 301**

(73) Patentinhaber: **ELPAG AG CHUR, Quaderstrasse 11,
CH-7001 Chur (CH)**

(72) Erfinder: **Bleckmann, Ingo, Dipl.-Ing. Dr.mont.,
Ignaz-Rieder-Kai 11, A-5020 Salzburg (AT)**

(74) Vertreter: **Liedl, Gerhard, Steinsdorfstrasse 21 - 22,
D-8000 München 22 (DE)**

**Beschreibung**

Die Erfindung betrifft einen elektrischen Durchlauferhitzer für Kaffeemaschinen oder ähnliche Haushaltsgeräte zur Herstellung von Aufgussgetränken nach den Merkmalen des Oberbegriffs des Patentanspruchs 1.

Es sind z.B. aus der DE-A 2 023 598 elektrische Durchlauferhitzer für Kaffeemaschinen bekannt, bei denen ein elektrischer Rohrheizkörper und ein Wasserrohr auf einer Trägerplatte angeordnet werden. Das Wasserrohr und der Rohrheizkörper werden durch herausgestanzte Lappen gemeinsam an der Trägerplatte festgeklammert. Die Trägerplatte wird dann durch eine metallische Platte, wie sie im folgenden als Dekorplatte bezeichnet wird, abgedeckt. Bereits in der angegebenen Druckschrift wird darauf hingewiesen, dass bei bekannten Ausführungsformen dieser Gattung infolge thermischer Wechselbeanspruchung der Wärmekontakt zwischen Rohrheizkörper und Wasserrohr einerseits und der Trägerplatte andererseits mit zunehmender Betriebsdauer schlechter wird. Als Folge davon spricht der dem Durchlauferhitzer zugeordnete Temperaturbegrenzer zu spät an, so dass Überhitzungserscheinungen auftreten, die zur Störung des Durchlauferhitzers führen können. Obwohl in der angegebenen Druckschrift behauptet wird, dass durch die dort aufgezeigte Lösung mit ausgestanzten Lappen eindeutig definierte thermische Wärmeübertragungsverhältnisse zwischen Heizkörper und Wasserrohr auch für längere Betriebszeiten sichergestellt werden, zeigte es sich, dass dies zumindest für die heutigen Ansprüche der Kaffeemaschinenhersteller nicht der Fall ist.

Aus der DE-A 2 808 182 (CERU) ist ein elektrischer Durchlauferhitzer zur Heisswasserbereitung bekannt, bei dem an einer zum Abstellen des Auffanggefässes, also insbesondere der Kaffeekanne dienenden Warmhalteplatte eine Spannschraube angeschweisst ist, die sich nach unten in Richtung des Gerätebodens esrtreckt. Eine Anordnung aus einem flachen Montageblech, einem auf dasselbe gelöteten hufeisenförmigen Rohrheizkörper und einem seitlich im Abstand an demselben angeordneten Wasserrohr besitzt eine zentrale Öffnung. Mit dieser wird die Anordnung auf die Spannschraube so aufgesteckt, dass der Rohrheizkörper zwischen der Montageplatte und der Warmhalteplatte zu liegen kommt. Durch eine auf die Spannschraube aufgeschraubte Mutter wird dann über die Montageplatte der Rohrheizkörper mit seiner flachen Oberseite und das Wasserrohr an die Unterseite der Warmhalteplatte angedrückt.

Die bekannte Anordnung hat mehrere Nachteile. Wenn die Warmhalteplatte als «Dekorplatte» ausgebildet wird, welche ein ansprechendes, glänzendes oder farbiges Aussehen der Abstellfläche für die Kaffeekanne aufweist, dann besteht die Gefahr, dass diese Oberfläche durch das Anschweissen der Spannschraube beschädigt wird oder dass sich die Dekorplatte «verzieht». Im allgemeinen werden die Durchlauferhitzer von spezialisierten Firmen an die Hersteller von Kaffeemaschinen geliefert. Wenn diese Hersteller Freiheit in der Gestaltung der Dekorplatte haben wollen, dann müssen sie selbst eine Spannschraube an dieselbe anschweissen. Dieser umständliche Arbeitsgang wird jedoch von Herstellern von Kaffeemaschinen nicht geschätzt, d.h. der gelieferte Durchlauferhitzer soll ohne Nachbearbeitung montierbar sein.

Bei der bekannten Anordnung endet das Montageblech am Rohrheizkörper. Das Wasserrohr liegt ausserhalb. Dies hat zur Folge, dass die Wärme über die Dekorplatte und die das Wasserrohr mit dem Rohrheizkörper verbindende Lötstelle von oben in das Wasserrohr eingespeist wird, d.h. in den mit Dampf und nicht mit Wasser gefüllten Bereich des Wasserrohres. Durch die Überhitzung des Dampfes geht jedoch viel Energie verloren, d.h. etwa 1/5 des zugeführten Wassers wird verdampft. Es entstehen unangenehme schnorchelnde Geräusche.

Kaffeemaschinen werden in den meisten Fällen mit Kunststoffgehäusen bestückt. Wenn ein Rohrheizkörper durchbrennt, dann tropft bei den bekannten Ausführungsformen das flüssige Metall auf den Boden des Kunststoffgefässes mit entsprechender Brandgefahr. Obwohl ein derartiges «Ausbrennen» einer Kaffeemaschine äusserst selten ist, sind die dabei jedoch auftretenden Schäden, wie Zimmerbrände oder dgl. ziemlich gross. Bei der erwähnten bekannten Ausführungsform besteht jedoch die Gefahr, dass vom Rohrheizkörpermantel abschmelzendes Material über die Oberfläche des Wasserrohres läuft und auf den Boden des Gehäuses tropft.

Aus der DE-A-2 642 571 (LICENTIA) ist eine elektrische Kaffeemaschine bekannt geworden, bei der ein elektrischer Rohrheizkörper seitlich oberhalb eines Wasserrohres einer Halteplatte angeordnet ist. An der Unterseite der Abstell- bzw. Warmhalteplatte ist ein Schraubbolzen angeschweisst. Über eine Spannmutter wird die Halteplatte an die Unterseite der Abstell- bzw. Warmhalteplatte angedrückt.

Auch bei dieser Anordnung ergeben sich die bereits oben erwähnten Nachteile, die durch das Anschweissen eines Schraubbolzens an die Unterseite der Abstellplatte bedingt sind. Da das Wasserrohr und der Rohrheizkörper unterhalb der Halteplatte angeordnet sind, wird eine gesonderte Abschirmplatte erforderlich, die ebenfalls gehalten und verspannt werden muss, wodurch die Konstruktion aufwendig wird.

Aus der US-A-1 743 301 (WOLCOTT) ist ein elektrisch beheizter Kochtopf bekannt geworden, bei dem an dem Boden des Kochtopfes eine elektrische Heizeinrichtung mittels einer Spannschraube angedrückt wird. Es handelt sich jedoch um keinen Durchlauferhitzer für Kaffeemaschinen, so dass auch die besonderen Probleme dort nicht auftreten.

Aus der CA-A-1 092 634 (TRANS-CANADA) ist eine elektrische Bratpfanne bekannt geworden, bei der ein Rohrheizkörperring mittels eines Bleches, das eine rinnenförmige Wölbung zur Aufnahme des Rohrheizkörpers besitzt, von aussen an den Boden der Bratpfanne angepresst wird.

Bei Kaffeemaschinen mit elektrischen Durchlauferhitzern wird heute z.B. eine Filtrattemperatur von 80° in dem Auffangefäss für das Aufgussgetränk, z.B. Kaffee, gefordert. Diese Forderung wird von einer fabrikneuen Kaffeemaschine auch bei dem ersten Durchlauf erfüllt. Merkwürdigerweise fällt jedoch dann die Filtrattemperatur beim zweiten Durchlauf z.B. auf 79° ab und erreicht erst mit dem sechsten Durchlauf einen konstanten Wert 70 bis 71°C. Es gab bisher keine Erklärung für diese merkwürdige Erscheinung, zumal noch ein unterschiedliches Verhalten zwischen Kaffeemaschinen derselben Produktion festzustellen ist. Eine mögliche Erklärung liegt im folgenden:

Presst man das Trageblech — im folgenden auch Montageblech genannt — mittels einer Spanneinrichtung, z.B. einer Spannschraube, in Richtung nach oben an die Unterseite der Dekorplatte, so wird ein Andruck unterschiedlicher Kraft, und zwar je nachdem, wie fest die Spannschraube von der Montagearbeitskraft angezogen wird, genau auf den der Spannschraube gegenüberliegenden Punkt der Dekorplatte wirken. Dies bedeutet, dass über diesen Punkt oder diese Stelle auch die Hauptwärmeleitung erfolgt. Durch die unterschiedlichen Wärmeausdehnungen der Dekorplatte und der Montageplatte unter Berücksichtigung des Abkühleffektes des Auffanggefässes auf die Dekorplatte, verlagert sich dann der Anpressdruck gegebenenfalls unter Nachlassen der Anpresskraft, was zu den genannten Erscheinungen führen dürfte. Darüber hinaus zeigt es sich, dass ein überwiegender Wärmefluss genau auf das Zentrum des Auffanggefässes für eine entsprechende Konstanthaltung der Temperatur des aufgefangenen Filtrats unter Berücksichtigung verschiedener Füllhöhen bzw. steigender Füllhöhen des Filtrats ungünstig ist. Ein ringförmiger hufeisenförmiger Wärmeübergang im Abstand etwa 1/3 von der Aussenkante des Gefässes und 2/3 zum Mittelpunkt ergibt wesentlich günstigere Verhältnisse.

Ein weiteres schwieriges Problem liegt in der Materialauswahl. Überwiegend wurde bisher Kupfer verwendet, da es einerseits sehr gut wärmeleitfähig ist und andererseits einen Schmelzpunkt über 1050°C hat. Bei aus Kupfer hergestellten Wasserrohren ergibt sich jedoch ein gefährlicher Kupferionengehalt in dem Aufgussgetränk. Wegen dieser Gefahren wurde bereits in einigen Ländern, z.B. Schweden, gesetzlich der Kupferionengehalt auf maximal 0,15 mg/l beschränkt. Dies bedeutet, dass Kaffeemaschinen, welche Wasserdurchlaufrohre aus Kupfer enthalten, in diesen Ländern nicht mehr verkauft werden können. Auch soweit der Verkauf in anderen Ländern frei ist, bestehen selbstverständlich von Seiten der Hersteller Bedenken, Kaffeemaschinen auf den Markt zu bringen, bei denen ein nicht unbedenklicher Kupferionengehalt im Aufgussgetränk unvermeidbar ist. Durchlauferhitzer, bei denen der Rohrheizkörper und die Montageplatte aus Kupfer und das Wasserrohr aus einem anderen Material bestehen, sind jedoch wegen der unterschiedlichen Schmelzpunkte der erforderlichen Lötverbindungen und dgl. nur schwer zu realisieren. Insbesondere bei der Kombination Kupfer-Aluminium treten wegen der Potentialunterschiede erhebliche Korrosionsprobleme auf. Würde der gesamte Durchlauferhitzer aus Aluminium hergestellt, welches einen Schmelzpunkt von nur 660°C hat, dann besteht bei den relativ hohen Betriebstemperaturen des Rohrheizkörpers bereits bei geringfügigen örtlichen Überhitzungen die Gefahr, dass der Rohrheizkörpermantel schmilzt. Das auf den Boden des im allgemeinen aus Kunststoff bestehenden Gehäuses der Kaffeemaschinen abtropfende Aluminium kann zur Entzündung des Kunststoffes führen, wobei durch Entzündung von beispielsweise über der Kaffeemaschine angeordneten Hängeschränken ein entsprechender Zimmerbrand ausgelöst werden kann.

Der Erfindung liegt dementsprechend die Aufgabe zugrunde, einen Durchlauferhitzer der in Rede stehenden Art vorzuschlagen, bei dem die Filtrattemperatur hoch, z.B. über 80°C konstant liegt, die erwähnte Brandgefahr ausgeschlossen und eine Kupferionenkonzentration in dem Aufgussgetränk vermieden wird. Darüber hinaus soll der Durchlauferhitzer preiswert herzustellen und einfach zu montieren sein.

Die Lösung der Aufgabe ergibt sich aus den Merkmalen der unabhängigen Ansprüche 1 und 6. Die Unteransprüche beschreiben bevorzugte Ausführungsformen.

Bei dem Durchlauferhitzer sind das Wasserdurchlaufrohr und der Rohrheizkörper zwischen der Dekorplatte und einem als Auffangschale ausgebildeten Montageblech angeordnet. Wenn der Rohrheizkörper aus irgendwelchen Gründen, z.B. Überhitzung oder Überschreitung der Lebensdauer nach aussen durchbrennt, dann werden vom Rohrheizkörpermantel abgesprühte oder abtropfende Metallteile von der Auffangschale aufgefangen, so dass sie nicht den Kunststoff des Gehäuses der Kaffeemaschine entzünden können. Die angegebene Brandgefahr wird damit mit Sicherheit ausgeschlossen. Da das Montageblech, der Rohrheizkörper und das Wasserdurchlauf-rohr aus Stahl mit einer Beschichtung vorzugsweise aus Aluminium besteht, wird einerseits ein relativ hoher Schmelzpunkt von über 1000°C gewährleistet, andererseits ergibt sich durch die Beschichtung der erwünschte Wärmeübergang sowie eine entsprechende Verbindungsmöglichkeit, z.B. durch Löten der genannten Teile. Da der Rohrheizkörper mit seiner flachen Oberseite an der Dekorplatte anliegt und der Anpressdruck unabhängig von thermischen Belastung durch die elastische Spannung der domartigen Wölbung der Montageplatte sichergestellt wird, ergibt sich der bisher noch nicht serienmässig erreichte Vorteil, dass die Filtrattemperatur konstant über 80°C auch nach Dauerversuchen, die sich über mehrere Monate erstrecken, verbleibt.

Auf der Zeichnungen zeigen:

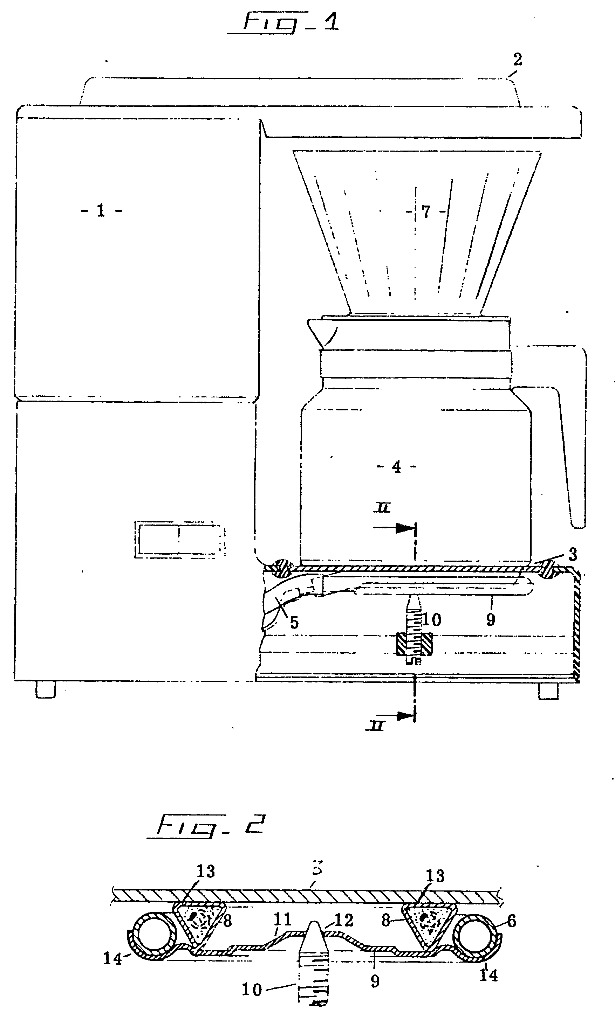

Fig. 1 eine teilweise ausgeschnittene Seitenansicht einer Kaffeemaschine;

Fig. 2 in vergrössertem Massstab einen Schnitt längs der Linie II-II in Fig. 1;

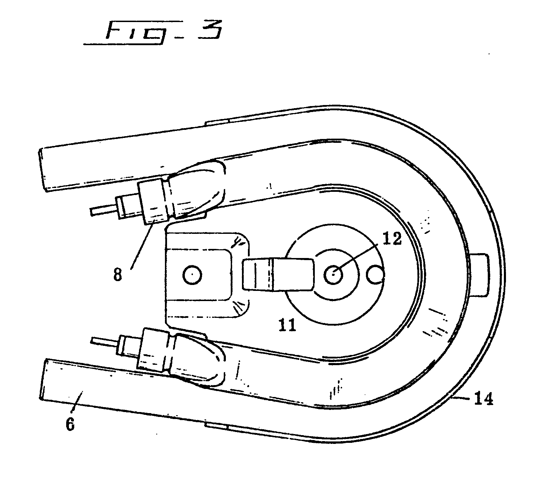

Fig. 3 eine Draufsicht auf den Durchlauferhitzer gemäss Fig. 2 vor der Montage.

Eine Kaffeemaschine besteht üblicherweise aus einem Kunststoffgehäuse 1 mit einem Steig- und Überlaufrohr 2 sowie einer Abstell- oder Dekorplatte 3, auf welcher das das Aufgussgetränk aufnehmende Auffanggefäss, z.B. eine Kaffeekanne 4, abgestellt werden kann. In dem Kunststoffgehäuse 1 befindet sich ein nicht dargestellter Vorratsbehälter für das Wasser. Dieses ist z.B. mit einer Schlauchverbindung 5 mit einem Wasserdurchlaufrohr 6 eines elektrischen Durchlauferhitzers verbunden. Der andere Anschluss des Wasserdurchlaufrohres 6 ist ebenfalls mit einem Schlauch mit dem Steigrohr 2 verbunden. Das vom Durchlauferhitzer erhitzte Wasser läuft über den Ausgang des Steigrohres 2 in ein Kaffeefilter 7 und von dort in die Kaffeekanne 4.

Der aus dem Wasserdurchlaufrohr 6, einem Rohrheizkörper 8 und einem Montageblech 9 bestehende Durchlauferhitzer wird mittels einer Spannschraube 10 an die Unterseite der Dekorplatte 3 angedrückt. Der Durchlauferhitzer hat dabei eine Doppelfunktion. Einerseits soll das im Wasserdurchlaufrohr 6 befindliche Wasser erhitzt und durch den Dampfdruck in das Steigrohr 2 hochgedrückt werden. Andererseits soll das sich in der Kaffeekanne 4 ansammelnde Kaffeefiltrat auf einer Filtrattemperatur von mindestens 80° gehalten werden. Diese Temperatur soll wenigstens 1 $^1/_2$ Stunden aufrechterhalten werden. Diese von den Kaffeemaschinenherstellern angestrebte Qualitätsnorm ist mit bekannten Durchlauferhitzern bisher nicht zu realisieren. Wie bereits eingangs beschrieben, verschlechtert sich der Wärmeübergang auf die Dekorplatte 3 und damit auf das Auffanggefäss 4 nach den ersten Probeläufen, so dass im allgemeinen nach dem sechsten Probelauf nur noch eine Filtrattemperatur von 70 bis 71° erreicht wird. Zur Lösung des Problems wirken nun mehrere Merkmale zusammen, und zwar in folgender Weise:

Das Montageblech 9 besitzt in seinem mittleren Bereich eine domartige Wölbung 11. Die Spannschraube 10 greift in eine Bohrung 12 der domartigen Wölbung 11 ein. Beim Anziehen der Spannschraube 10 wird die Wölbung 11 elastisch vorgespannt, wodurch gewährleistet wird, dass auch unter den thermischen Wechselbeanspruchungen ein gleichmässiger Anpressdruck des Durchlauferhitzers an die Unterseite der Dekorplatte aufrechterhalten wird.

Bei der in Fig. 2 dargestellten Ausführungsform besitzt weiterhin der Rohrheizkörper eine abgeflachte Oberfläche 13, wodurch unter dem erwähnten Anpressdruck ein guter Wärmeübergang auf die Dekorplatte 3 gesichert wird.

Das Wasserdurchlaufrohr 6 ist im Abstand von etwa 2 mm von dem Rohrheizkörper 8 angeordnet. Dies bedingt einerseits einen bevorzugten Wärmeübergang von dem Rohrheizkörper 8 auf die Dekorplatte 3. Andererseits fliesst ein erheblicher Teil der Wärmeleistung des Rohrheizkörpers 8 über das Montageblech, und zwar über die abgerundeten Ränder 14 derselben. Dies hat zur Folge, dass die Wärme in den unteren Teil des Wasserdurchlaufrohres 6 bevorzugt eingeführt wird, wodurch sich ein wesentlich gleichmässigerer Betrieb der Kaffeemaschine ergibt. Eine Wärmeeinspeisung in den Dampfraum des Wasserdurchlaufrohres 6 ist, wie die Praxis zeigt, für den Betrieb nachteilig, da dann aus dem Steigrohr 2 eine grössere Menge Dampf austritt. Abgesehen von dem Energieverlust ergibt sich auch das unangenehme «schorchelnde Geräusch» der Kaffeemaschine. Trotz des bevorzugten Wärmeübergangs auf die Dekorplatte 3 und der damit bedingten «Hochstellung» des Rohrheizkörpers 8 gelingt auf diese Weise trotzdem eine Wärmeeinspeisung in das Wasserdurchlaufrohr 6 von unten.

Wenn der Rohrheizkörper 8 durchbrennt, sei es durch Überhitzung, z.B. bei Ausfall des Regelthermostaten oder sei es durch Überschreiten der natürlichen Lebensdauer, wobei die Heizwendel des Rohrheizkörpers 8 im Laufe der Zeit verdampft und die Isoliereigenschaften des Isoliermaterials dadurch verschlechtert werden, dann fängt die Montageplatte vom Rohrheizkörpermantel abgesprühte oder abtropfende Metallteile auf. Selbst bei vollständigem Schmelzen des Rohrheizkörpermantels 8 sammelt sich dann das schmelzflüssige Metall in der Rinne zwischen der domförmigen Wölbung 11 und den aufgebogenen Rändern 14 an. Dadurch wird eine Brandgefahr mit Sicherheit ausgeschlossen. Obwohl ein Ausbrennen einer Kaffeemaschine relativ selten ist — statistisch etwa ein Fall auf 1 Million Geräte —, muss trotzdem wegen der meistens auftretenden hohen Schadenshöhe auf diesen Umstand besonderer Wert gelegt werden.

Die beschriebene besondere Anordnung ermöglicht nun ein Ausweichen auf andere Materialien als Kupfer, wobei bevorzugt wird, dass das Wasserrohr 6, der Rohrheizkörper 8 und die Montageplatte 9 aus Stahl mit einer Aluminiumbeschichtung hergestellt werden. Die gegenüber Kupfer geringere Wärmeleitfähigkeit kann bei der speziellen Anordnung voll ausgeglichen werden. Der Wärmeübergang auf die Dekorplatte 3 ist durch die satte Anlage der Rohrheizkörperoberfläche 13 unter dem Druck der Spannschraube 10 bzw. der elastischen Spannung der domförmigen Wölbung 11 als ausreichend anzusehen. Der Wärmeübergang auf das Wasserdurchlaufrohr 6 ist etwas gebremst, was günstig ist, wie auch das Abrücken des Rohrheizkörpers 8 vom Wasserdurchlaufrohr 6 zeigt. Durch die Beschichtung des Stahles wird weiterhin die Wärmeleitung auf das angestrebte Optimum gebracht. Darüber hinaus ist die Anordnung durch die Aluminiumbeschichtung sehr korrosionsbeständig. Die Teile können durch Lötung miteinander verbunden werden.

Ein weiterer Vorteil ergibt sich durch die höhere Festigkeit des Stahles im Vergleich zu Kupfer und den daraus resultierenden höheren Anpressdruck des Durchlauferhitzers an die Unterseite der Dekorplatte 3. Ein weiterer Vorteil liegt darin, dass das Gewicht des Durchlauferhitzers bei gleicher Leistung und Stabilität nur die Hälfte von einem aus Kupfer gefertigten beträgt, was sich beispielsweise in den Unkosten beim Exportversand auswirkt.

**Patentansprüche**

1. Elektrischer Durchlauferhitzer für Kaffemaschinen oder ähnliche Haushaltsgeräte zur Herstellung von Aufgussgetränken, bestehend aus einem hufeisenförmig oder kreisrund gebogenen Rohrheizkörper (8), einem ähnlich geformten und seitlich in einem bestimmten, geringen Abstand an dem Rohrheizkörper (8) angeordneten Wasserdurchlaufrohr (6) sowie einem diese Teile tragenden und miteinander verbindenden Montageblech (9), welches im Abstand von einer dem Abstellen einer Kaffeekanne dienenden Dekorplatte (3) angeordnet ist und wobei der Rohrheizkörper (8) und das Wasserdurchlaufrohr (6) in dem Zwischenraum zwischen der Dekorplatte (3) und dem Montageblech (9) angeordnet sind und der eine abgeflachte Oberfläche besitzende Rohrheizkörper (8) mit dieser an der Unterseite der Dekorplatte (3) anliegt, dadurch gekennzeichnet, dass das Montageblech (9) in seinem mittleren Bereich eine domartige Wölbung (11) besitzt, welche einen zentralen Angriffspunkt (12) für eine von unten angreifende Spannschraube (10) besitzt, wobei beim Anziehen der Spannschraube (10) die Wölbung (11) elastisch vorgespannt wird und dass das Wasserdurchlaufrohr (6) in einem bestimmten geringen Abstand von dem Rohrheizkörper (8) angeordnet ist und die Ränder des Montagebleches (9) den unteren Bereich des Wasserdurchlaufrohres (6) umschliessen und dass von der Wölbung (11) eine wannenförmige Einsenkung im Montageblech (9) gebildet wird, welche bei Überhitzen oder Durchbrennen des Rohrheizkörpers (8) abfliessende oder abgesprühte Metallteile auffängt.

2. Durchlauferhitzer nach Anspruch 1, dadurch gekennzeichnet, dass der Rohrheizkörper (8) ein Mantelrohr besitzt, welches aus Stahl besteht und dessen Oberfläche vorzugsweise mit Aluminium beschichtet ist.

3. Durchlauferhitzer nach Ansprüchen 1 oder 2, dadurch gekennzeichnet, dass das Wasserdurchlaufrohr (6) aus Aluminium oder aus Stahl mit einer Aluminiumbeschichtung besteht.

4. Durchlauferhitzer nach Anspruch 1, dadurch gekennzeichnet, dass der zentrale Angriffspunkt für die Spannschraube von einer Bohrung (12) gebildet wird, in welche die Spitze der Spannschraube (10) eingreift.

5. Durchlauferhitzer nach einem der Ansprüche 1 bis 4, dadurch gekennzeichnet, dass das Dekorblech (3) aus Chromnickelstahl besteht.

6. Haushaltsgerät zur Herstellung von Aufgussgetränken, insbesondere von Kaffee, mit einem Kunststoffgehäuse, dadurch gekennzeichnet, dass ein Durchlauferhitzer nach Ansprüchen 1 bis 5 mittels einer sich im Boden des Kunststoffgehäuses abstützenden Spannschraube (10) an eine das Auffanggefäss (4) für das Aufgussgetränk tragenden Dekorplatte (3) angepresst ist.

7. Elektrischer Durchlauferhitzer für Kaffeemaschinen oder ähnliche Haushaltsgeräte zur Herstellung von Aufgussgetränken nach Ansprüchen 1 bis 5, dadurch gekennzeichnet, dass das Wasserrohr (6), der Rohrheizkörper (8) und bzw. oder die Montageplatte (11, 16) aus Stahl bestehen, der vorzugsweise mit Aluminium beschichtet ist.

**Claims**

1. An electric continuous flow heater for coffee machines or similar household implements used to prepare infusion beverages, consisting of a tubular heater body (8) bent to horseshoe or circular shape, a similarly shaped water flowpipe (6) disposed at the side of the tubular heater body (8) at a certain small distance therefrom, as well as a mounting plate (9) supporting and interconnecting these components, said mounting plate being arranged at a distance from a decorative plate (3) serving as a stand for a coffee pot, wherein the tubular heater body (8) and the water flow pipe (6) are arranged in the space between the decorative plate (3) and the mounting plate (9), and the tubular heater body (8), having a flattened surface, abuts against the underside of the decorative plate (3), characterized in that the central portion of the mounting plate (9) has a dome-like bulge (11) having a central point (12) of engagement for a tightening screw (10) acting from below, wherein during tightening of the tightening screw (10) the bulge (11) is elastically pre-stressed, and that the water flow pipe (6) is arranged at a certain small distance from the tubular heater body (8), and the edges of the mounting plate (9) enclose the lower portion of the water flow pipe (6), and that the bulge (11) forms a trough-shaped depression in the mounting plate (9) for catching a downward flow or spray of metal particles in case the tubular heater body (8) overheats or burns through.

2. A continuous flow heater according to claim 1, characterized in that the tubular heater body (8) has a jacket tube which consists of steel and the surface of which is preferably coated with aluminium.

3. A continuous flow heater according to claims 1 or 2, characterized in that the water flow pipe (6) consists of aluminium or of steel having an aluminium coating.

4. A continuous flow heater according to claim 1, characterized in that the central point of engagement for the tightening screw is formed by a bore (12), in which the tip of the tightening screw (10) engages.

5. A continuous flow heater according to any one of claims 1 to 4, characterized in that the decorative plate (3) consists of chrome nickel steel.

6. A household implement for preparing infusion beverages, in particular coffee, having a plastic housing, characterized in that a continuous flow heater according to claim 1 to 5 is pressed against a decorative plate (3) supporting the receptacle (4) for the infusion beverage by means of a tightening screw (10) supported in the bottom of the plastic housing.

7. An electric continuous flow heater for coffee machines or similar household implements used to prepare infusion beverages according to claims 1 to 5, characterized in that the water flow pipe (6), the tubular heater body (8) and/or the mounting plate (11, 16) consists of steel, which is preferably coated with aluminium.

**Revendications**

1. Chauffe-eau électrique à écoulement libre, pour machines à café ou appareils ménagers analogues destinés à la préparation de boissons obtenues par infusion, constitué par un corps de chauffe tubulaire (8) recourbé en fer à cheval ou en forme de cercle, un conduit d'eau (6) à écoulement libre conformé de manière analogue et disposé latéralement à une distance faible et déterminée du corps de chauffe tubulaire (8) ainsi qu'une tôle de montage (9) qui, portant ces éléments constitutifs et les reliant entre eux, est montée à une certaine distance d'une plaque décorative (3) servant à la pose d'une cafetière, le corps de chauffe tubulaire (8) et le conduit d'eau (6) à écoulement libre étant montés dans l'intervalle séparant la plaque décorative (3) de la tôle de montage (9) et le corps de chauffe tubulaire (8) muni d'une surface supérieure aplatie prenant appui avec celle-ci contre le dessous de la plaque décorative (3), caractérisé en ce que la tôle de montage (9) présente dans sa région médiane un bombement (11) en forme de dôme, lequel présente un point d'attaque central (12) pour une vis de serrage (10) agissant d'en bas, de sorte qu'en cas de serrage de la vis (10) le bombement (11) est soumis élastiquement à une tension initiale, en ce que le conduit d'eau (6) à écoulement libre se trouve à une faible distance bien déterminée du corps de chauffe tubulaire (8) et les bords de la tôle de montage (9) enferment la partie inférieure du conduit d'eau (6) à écoulement libre et en ce que par le bombement (11) est formé dans la tôle de montage (9) un creux en forme de cuvette qui en cas de surchauffe ou de grillage du corps de chauffe tubulaire (8) recueille des particules métalliques projetées ou s'écoulant vers le bas.

2. Chauffe-eau à écoulement libre selon la revendication 1, caractérisé en ce que le corps de chauffe tubulaire (8) présente une gaine protectrice qui est constituée d'acier et dont la surface est de préférence revêtue d'aluminium.

3. Chauffe-eau à écoulement libre selon la revendication 1 ou 2, caractérisé en ce que le conduit d'eau (6) à écoulement libre est en aluminium ou en acier muni d'un revêtement en aluminium.

4. Chauffe-eau à écoulement libre selon la revendication 1, caractérisé en ce que le point d'attaque central de la vis de serrage est formé par un trou (12) dans lequel s'engage la pointe de la vis de serrage (10).

5. Chauffe-eau à écoulement libre selon l'une quelconque des revendications précédentes, caractérisé en ce que la tôle décorative (3) est en acier au chrome-nickel.

6. Appareil ménager pour la préparation de boissons obtenues par infusion, en particulier du café, comprenant une enveloppe en matière plastique, caractérisé en ce qu'un chauffe-eau à écoulement libre selon l'une quelconque des revendications 1 à 5 est appuyé, au moyen d'une vis de serrage (10) prenant appui sur le fond de l'enveloppe en matière plastique, contre une plaque décorative (3) qui porte le récipient collecteur (4) pour la boisson obtenue par infusion.

7. Chauffe-eau électrique à écoulement libre, pour machines à café ou appareils ménagers analogues destinés à la préparation de boissons obtenues par infusion, selon l'une quelconque des revendications 1 à 5, caractérisé en ce que le conduit d'eau (6), le corps de chauffe tubulaire (8) et/ou la tôle de montage (11, 16) sont en acier de préférence revêtu d'aluminium.

## Fig-1

## Fig-2

Fig. 3